# EUROPÄISCHE PATENTANMELDUNG

(11) **EP 3 150 876 A1**
(43) Veröffentlichungstag der Anmeldung: **05.04.2017**
(21) Anmeldenummer: 15187245.4
(22) Anmeldetag: 29.09.2015
(51) Int. Cl.: F16D 1/104, F16D 1/112, G01D 5/347, F16B 21/20, F16B 21/18

(54) **GEBERBEFESTIGUNG ZUR BEFESTIGUNG EINER GEBERWELLE AN EINER ANTRIEBSWELLE SOWIE VERFAHREN**

(71) Anmelder: Siemens Aktiengesellschaft, 80333 München (DE)
(72) Erfinder: Knauff, Axel, 97702 Münnerstadt (DE)

(57) **Zusammenfassung**

Die Erfindung betrifft eine Geberbefestigung umfassend eine Antriebswelle (4) und ein Gebersystem mit einer Geberwelle (10), wobei die Geberwelle (10) zur Verbindung teilweise in die Antriebswelle (4) in einen dafür vorgesehen Einschub (30) einschiebbar ist, wobei zur Befestigung ein radial elastisches Element in dem Einschub (30) angeordnet ist, so dass die Verbindung unter radialer Spannung steht.

Weiterhin betrifft die Erfindung ein Verfahren.

## Beschreibung

Die Erfindung betrifft eine Geberbefestigung umfassend eine Antriebswelle und ein Gebersystem mit einer Geberwelle, wobei die Geberwelle zur Verbindung teilweise in die Antriebswelle in einen dafür vorgesehen Einschub eingeschoben ist. Des Weiteren betrifft die Erfindung ein Verfahren.

Bei Elektromotoren wird die Geberwelle normalerweise starr mit der Antriebswelle verbunden. Die Geberwelle von Drehgeber für Elektromotoren, insbesondere Servomotoren, wird üblicherweise mit Klemmverbindungen oder kegeligen Sitzen mit den Antriebswellen verbunden. Hierfür werden für gewöhnlich Schrauben verwendet.

Die Verbindung beider axial miteinander fluchtender Wellen erfolgt über eine Presspassung, die durch eine zylindrische und hohlzylindrische Passform beider Wellen und durch eine zentrale, beide Wellen in axialer Richtung miteinander verbindende Befestigungsschraube hergestellt wird.

Die Verspannung beider Wellen wird durch Anziehen der Befestigungsschraube herbeigeführt, deren Schaft durch eine zentrale Bohrung der Geberwelle hindurchgeführt und deren Schraubengewinde in ein Innengewinde der Antriebswelle eingeschraubt wird. Dabei liegt der Schraubenkopf an der Stirnseite oder am Boden einer stirnseitigen Bohrung der Geberwelle an. Ein Befestigungsschraubengewinde greift in ein Innengewinde einer Sacklochbohrung der Antriebswelle ein, das mit der zentralen, axial gerichteten Bohrung der Geberwelle fluchtet.

Bei der Verwendung kegeliger Sitze werden beispielsweise Zentralschrauben verwendet. Ist jedoch eine Signalerfassung vorgesehen, so ist dies nicht mehr möglich, da wesentliche Teile der Signalerfassung hier zwingend zentral angeordnet sein müssen.

Zudem erfordert die Befestigung mittels einer Schraube zusätzliche Bearbeitungen in der Antriebswelle, nämlich das Gewinde, und in der Geberwelle, nämlich die Bohrung, und nicht zuletzt eine Schraube.

Aufgabe der vorliegenden Erfindung ist es daher, eine Geberbefestigung und ein Verfahren für eine verbesserte Befestigung der Antriebswelle mit der Geberwelle anzugeben, welche die oben genannten Probleme lösen.

Die auf die Geberbefestigung bezogene Aufgabe wird gelöst durch die Angabe einer Geberbefestigung, umfassend eine Antriebswelle und ein Gebersystem mit einer Geberwelle, wobei die Geberwelle zur Verbindung teilweise in die Antriebswelle in einen dafür vorgesehen Einschub einschiebbar ist, wobei zur Befestigung ein radial elastisches Element in dem Einschub angeordnet ist, so dass die Verbindung unter radialer Spannung steht.

Die auf das Verfahren bezogene Aufgabe wird gelöst durch die Angabe eines Verfahrens zur Geberbefestigung mit einer Antriebswelle und einem Gebersystem mit einer Geberwelle, wobei die Geberwelle zur Verbindung teilweise in die Antriebswelle in einen dafür vorgesehen Einschub eingeschoben wird, wobei die Verbindung unter radialer Spannung steht, indem zur Befestigung ein radial elastisches Element in dem Einschub angeordnet wird.

Das radial elastische Element dient der Fixierung der Geberwelle als auch der Fixierung in der Antriebswelle. Durch die Elastizität ist sichergestellt, dass in jedem Fall die Verbindung unter radialer Spannung steht und somit funktionsfähig bleibt.

Durch die Erfindung wird nunmehr Platz für eine zentrale Positionierung der Signalerfassung zur Verfügung gestellt.

Das Verfahren ist auf der erfindungsgemäßen Geberbefestigung durchführbar.

In den Unteransprüchen sind weitere vorteilhafte Maßnahmen aufgelistet, die beliebig miteinander kombiniert werden können, um weitere Vorteile zu erzielen.

Bevorzugt ist das radial elastische Element als radial ausragende, flügelartige Sperrelemente ausgebildet. Insbesondere sind die Sperrelemente gebogen und voneinander beanstandet, d.h. sozusagen sägezahnartig angeordnet.

In einer bevorzugten Ausgestaltung sind die Sperrelemente als Gebersperrelemente und Antriebssperrelemente ausgebildet. Dabei sind die Gebersperrelemente und die Antriebssperrelemente radial entgegengesetzt ausgerichtet. D.h. die Gebersperrelemente und Antriebssperrelemente weisen in jeweils sich gegenüberliegende Richtungen.

Bevorzugt sind die Gebersperrelemente axial entgegengesetzt zu den Antriebssperrelementen gebogen. Durch diese Biegung ist eine leichte Fügbarkeit gewährleistet, während gleichzeitig eine Sperrung in entgegengesetzter Richtung stattfindet. Durch diese federnde Charakteristik steht in jedem Fall die durch die Antriebswelle und die Geberwelle ausgebildete Wellen-Naben-Verbindung unter radialer Spannung und bleibt somit in jedem Fall funktionsfähig. Dies bewirkt eine verbesserte Betriebssicherheit.

In einem Ausführungsbeispiel weist zumindest die Geberwelle eine Geberumfangsaußenseite auf. Die Antriebsperrelemente sind radial nach außen weisend, zum Fixieren der Geberwelle in der Antriebswelle an dieser Geberumfangsaußenseite angeordnet. Dabei können mehrere Ringe von Antriebsperrelementen an der Geberumfangsaußenseite angebracht werden, was für eine erhöhte Betriebssicherheit sorgt. Zudem kann die Antriebswelle eine Antriebsumfangsinnenseite aufweisen. Die Gebersperrelemente sind hierbei radial nach außen weisend an dieser Antriebsumfangsinnenseite angeordnet.

Dabei können die Antriebssperrelemente mit der Antriebswelle und die Gebersperrelemente mit der Geberwelle lösbar oder unlösbar verbunden sein.

Als ein weiteres Ausführungsbeispiel ist eine Federscheibe zum Einbringen in dem Einschub vorgesehen, an der das radial elastische Element angeordnet ist. Dabei ist das radial elastische Element als radial ausragende, flügelartige Sperrelemente ausgebildet, wobei die Federscheibe eine Innenumfangsseite mit einem Innendurchmesser aufweist und die Gebersperrelemente an der Innenumfangsseite angeordnet sind, und wobei die Federscheibe an der Außenumfangsseite einen Außendurchmesser aufweist und wobei die Antriebssperrelemente an der Außenumfangsseite angeordnet sind und wobei die Gebersperrelemente und die Antriebssperrelemente radial entgegengesetzt ausgerichtet sind. Dabei weisen die Antriebssperrelemente sozusagen radial nach außen, während die Gebersperrelemente radial nach innen weisen. Die inneren Gebersperrelemente dienen der Fixierung der Geberwelle, während die äußeren Antriebssperrelemente für die Fixierung in der Antriebswelle sorgen.

Bevorzugt ist zumindest eines der Antriebssperrelemente mit dem korrespondierenden Gebersperrelement durch einen Steg verbunden. Dadurch kann eine leichte Befestigung an der Federscheibe erzielt werden.

In einer bevorzugten Ausgestaltung sind die Antriebssperrelemente axial entgegengesetzt zu den Gebersperrelementen gebogen. Durch diese Biegung ist eine leichte Fügbarkeit gewährleistet, während gleichzeitig eine Sperrung in entgegengesetzter Richtung stattfindet.

Dabei können die Antriebssperrelemente mit der Geberwelle und die Gebersperrelemente mit der Antriebswelle lösbar oder unlösbar verbunden sein.

Bevorzugt weist das radial elastische Element eine federnde Charakteristik auf. Durch die federnde Charakteristik ist sichergestellt, dass in jedem Fall die Wellen-Naben-Verbindung unter radialer Spannung steht und somit in jedem Fall funktionsfähig bleibt.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1:: einen Teillängsschnitt einer elektrischen Maschine im Bereich des Gebersystems nach dem Stand der Technik,
- FIG 2:: ein erstes Beispiel einer ersten Geberbefestigung in der Vorderansicht,
- FIG 3:: die erste Geberbefestigung in der Seitenansicht,
- FIG 4:: die erste Geberbefestigung im eingebauten Zustand,
- FIG 5:: ein zweites Beispiel einer zweiten Geberbefestigung in der Seitenansicht.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden ohne den Schutzumfang der Erfindung, wie er durch die nachfolgenden Patentansprüche definiert wird, zu verlassen.

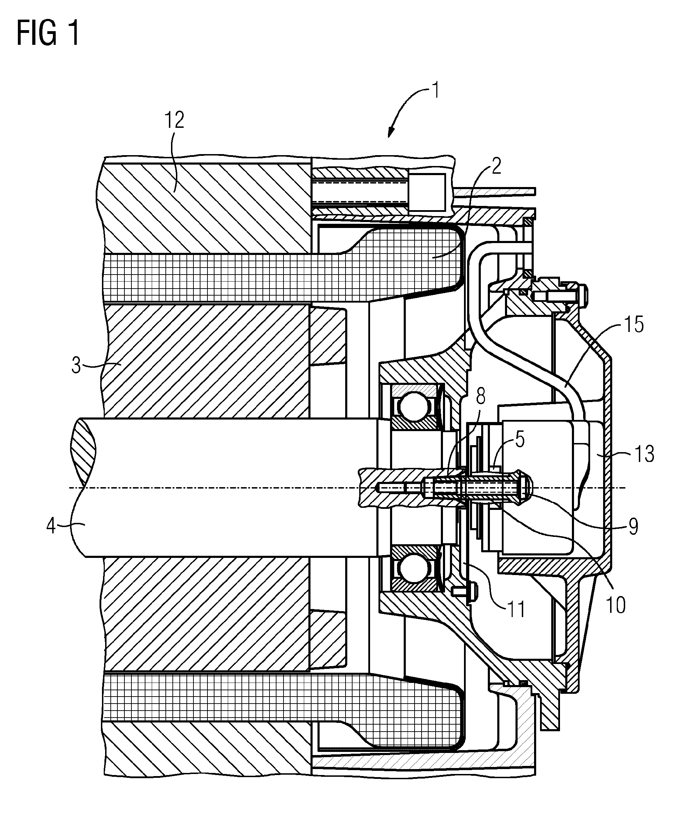

FIG 1 zeigt einen Teillängsschnitt einer elektrischen Maschine 1 mit einem stirnseitig angebrachten Gebersystem 13 mit einer Geberleitung 15. Die elektrische Maschine 1 kann dabei einen der bekannten Maschinentypen darstellen, wie Asynchronmaschine oder Synchronmaschine oder einen anderen Typ bei dem Geber eingesetzt werden. Der Stator 12 mit seiner Wicklung 2 und der Rotor 3 mit seiner Antriebswelle 4 bilden im Wesentlichen die elektrische Maschine 1. An der Stirnseite des Rotors 3 befindet sich das Gebersystem 13 mit einer Drehmomentstütze 11 und einer Lagerung 5. Das Gebersystem 13 umfasst dabei eine Geberwelle 10, welche mit der Antriebswelle 4 über eine Befestigungsschraube 9 verbunden ist. Dafür weist die Antriebswelle 4 eine Buchse 8 auf.

Da wesentliche Teile der Signalerfassung zwingend zentral angeordnet sein müssen, ist jedoch so eine Konstruktion mit einer Befestigungsschraube 9 nicht zur Signalerfassung geeignet. Zudem erfordert die Befestigung mittels Befestigungsschraube 9 zusätzliche Bearbeitungen in der Antriebswelle 4 (Gewinde), der Geberwelle 10 (Bohrung) und nicht zuletzt eine Befestigungsschraube 9. Ziel der Erfindung ist auf all diese Dinge verzichten zu können und so Platz für eine zentrale Positionierung der Signalerfassung zur Verfügung stellen zu können.

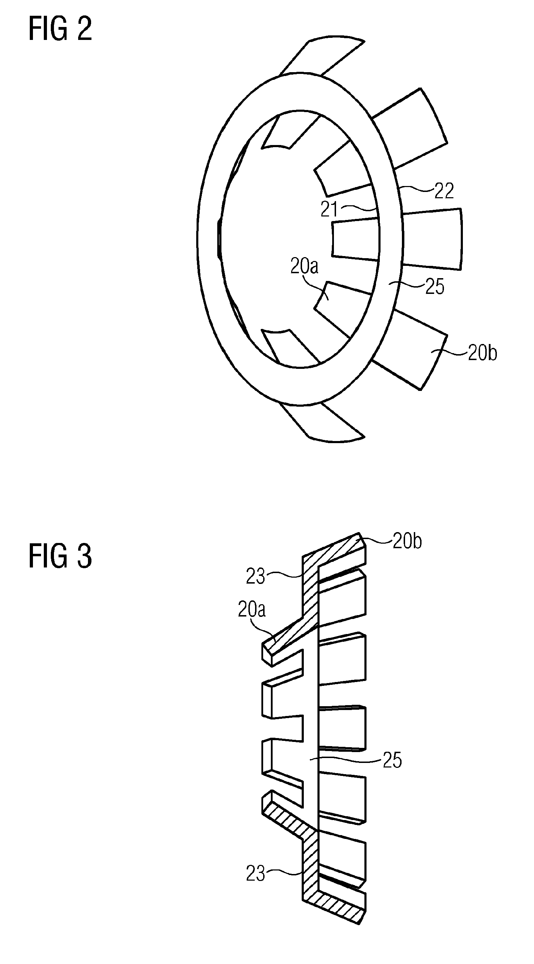

Erfindungsgemäß wird nun die Geberbefestigung mit einem radial elastischem Element durgeführt. Das radial elastische Element kann dabei Gebersperrelemente 20a und Antriebssperrelemente 20b aufweisen (FIG 2).

Dabei kann die Geberbefestigung, wie in einem ersten Beispiel, als eine Federscheibe 25 ausgeführt sein, FIG 2. Die Federscheibe 25 weist eine Innenumfangsseite 21 mit einem Innendurchmesser auf, wobei die Gebersperrelemente 20a an der Innenumfangsseite 21 angeordnet sind. Die Federscheibe 25 weist zudem eine Außenumfangsseite 22 mit einem Außendurchmesser auf, wobei die Antriebssperrelemente 20b an der Außenumfangsseite 22 angeordnet sind. Die Gebersperrelemente 20a und die Antriebssperrelemente 20b sind dabei so angeordnet, dass sie in entgegengesetzte radiale Richtung weisen.

Die Antriebssperrelemente 20b und die Gebersperrelemente 20a sind dabei axial entgegengesetzt gebogen. Die inneren Gebersperrelemente 20a dienen der Fixierung der Geberwelle 10, während die äußeren Antriebssperrelemente 20b für die Fixierung in der Antriebswelle 4 sorgen. Durch die Biegung der Antriebssperrelemente 20b / Gebersperrelemente 20a ist eine leichte Fügbarkeit gewährleistet, während gleichzeitig eine Sperrung in entgegengesetzter Richtung stattfindet. Durch die federnde Charakteristik ist sichergestellt, dass in jedem Fall, die durch die Antriebswelle 4 in die eingeschobene Geberwelle 10 gebildete Wellen-Naben-Verbindung unter radialer Spannung steht und somit funktionsfähig bleibt.

FIG 3 zeigt eine Seitenansicht eines Federrings 25 mit Antriebssperrelementen 20b und Gebersperrelementen 20a in der Seitenansicht. Dabei können die Antriebssperrelemente 20b und Gebersperrelemente 20a durch einen Steg 23 miteinander verbunden sein. Die Antriebssperrelemente 20b und Gebersperrelemente 20a können versetzt zueinander und sägezahnartig um die jeweilige Außenumfangsseite 22 und Innenumfangsseite 21 angeordnet sein. Die Antriebssperrelemente 20b und Gebersperrelemente 20a können dabei unlösbar oder lösbar mit der Antriebswelle 4 als auch der Geberwelle 10 verbunden sein. Ebenso können die Antriebssperrelemente 20b und Gebersperrelemente 20a lösbar oder unlösbar mit der Federscheibe 25 verbunden sein. Dabei sind die Gebersperrelemente 20a in Richtung der Einschieberichtung der Geberwelle 10 in einen Einschub 30 der Antriebswelle 4 gebogen; die Antriebssperrelemente 20b sind entgegen der Einschieberichtung der Geberwelle 10 gebogen.

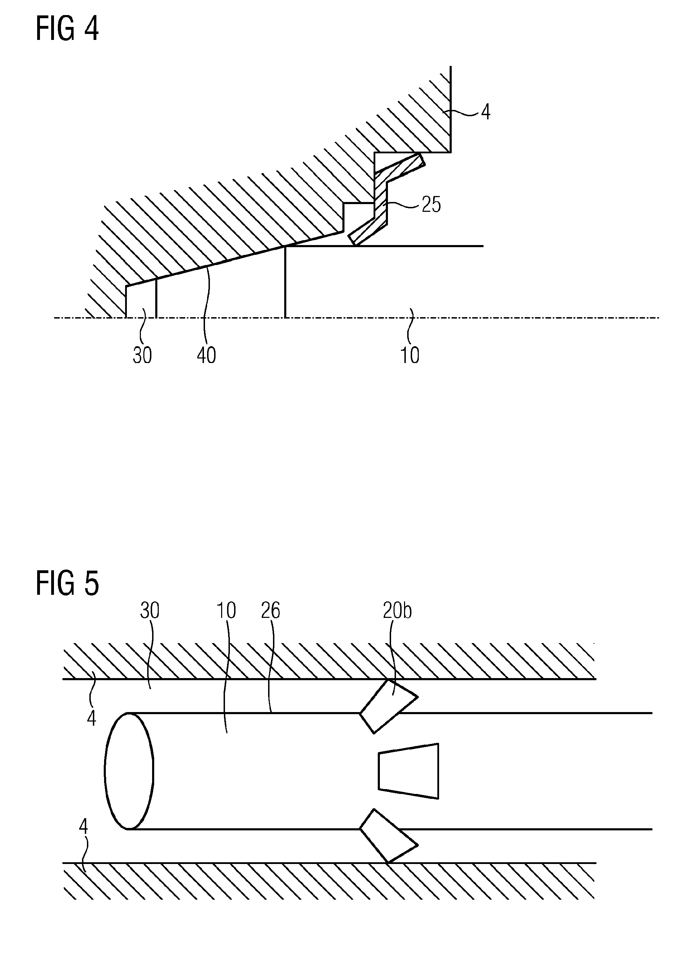

FIG 4 zeigt die Federscheibe 25 mit Antriebssperrelementen 20b (FIG 2) und Gebersperrelementen 20a (FIG 2) im eingebauten Zustand. Dabei ist die Federscheibe 25 in dem Einschub 30 eingebracht. Dabei ist mit 40 ein kegeliger Sitz bezeichnet, der der besseren Zentrierung der Geberwelle 10 dient.

FIG 5 zeigt ein weiteres Ausführungsbeispiel der Erfindung. Hier weist die Geberwelle 10 eine Geberumfangsaußenseite 26 mit Antriebssperrelementen 20b auf, wobei die Antriebssperrelemente 20b radial nach außen weisend an der Geberumfangsaußenseite 26 angeordnet sind. Dabei sind hier die Antriebssperrelemente 20b entgegen der Einschieberichtung der Geberwelle 10 in dem Einschub 30 der Antriebswelle 4 gebogen. D.h. die Antriebssperrelemente 20b sorgen für die Fixierung in der Antriebswelle 4. Dabei können auch mehrere solcher Ringe von Antriebssperrelementen 20b an der Geberumfangsaußenseite 26 angebracht sein. Ein weiteres Ausführungsbeispiel besteht darin, die Geberwelle 10 zunächst in eine Art Spreizdübel fest einzustecken, wobei zumindest der Spreizdübel solche Antriebssperrelemente 20b vorsieht und zum Einschieben mit der Geberwelle 10 in dem Einschub 30 ausgeführt ist.

Auch können selbstverständlich Gebersperrelemente 20a vorhanden sein, welche direkt an der Antriebswelle 4 bzw. an der Antriebsumfangsinnenseite der Antriebswelle 4 radial nach außen weisend angeordnet sind (nicht gezeigt).

## Patentansprüche

1. Geberbefestigung umfassend eine Antriebswelle (4) und ein Gebersystem mit einer Geberwelle (10), wobei die Geberwelle (10) zur Verbindung teilweise in die Antriebswelle (4) in einen dafür vorgesehen Einschub (30) einschiebbar ist,
**dadurch gekennzeichnet, dass** zur Befestigung ein radial elastisches Element in dem Einschub (30) angeordnet ist, so dass die Verbindung unter radialer Spannung steht.

2. Geberbefestigung nach Anspruch 1,
**dadurch gekennzeichnet, dass** das radial elastische Element als radial ausragende, flügelartige Sperrelemente ausgebildet ist.

3. Geberbefestigung nach Anspruch 2,
**dadurch gekennzeichnet, dass** die Sperrelemente gebogen sind.

4. Geberbefestigung nach Anspruch 2 oder 3,
**dadurch gekennzeichnet, dass** die Sperrelemente voneinander beanstandet sind.

5. Geberbefestigung nach einem der Ansprüche 2 bis 4,
**dadurch gekennzeichnet, dass** die Sperrelemente als Gebersperrelemente (20a) und Antriebssperrelemente (20b) ausgebildet sind, wobei die Gebersperrelemente (20a) und die Antriebssperrelemente (20b) radial entgegengesetzt ausgerichtet sind.

6. Geberbefestigung nach Anspruch 5,
**dadurch gekennzeichnet, dass** die Gebersperrelemente (20a) axial entgegengesetzt zu den Antriebssperrelemente (20b) gebogen sind.

7. Geberbefestigung nach Anspruch 5 oder 6,
**dadurch gekennzeichnet, dass** zumindest die Geberwelle (10) eine Geberumfangsaußenseite (26) aufweist und die Antriebssperrelemente (20b) radial nach außen weisend an der Geberumfangsaußenseite (26) angeordnet sind.

8. Geberbefestigung nach Anspruch 6,
**dadurch gekennzeichnet, dass** zudem die Antriebswelle (4) eine Antriebsumfangsinnenseite aufweist und die Gebersperrelemente (20a) radial nach außen weisend angeordnet sind.

9. Geberbefestigung nach einem der vorhergehenden Ansprüche 7 bis 8,
**dadurch gekennzeichnet, dass** die Antriebssperrelemente (20b) mit der Antriebswelle (4) lösbar oder unlösbar verbunden sind.

10. Geberbefestigung nach einem der vorhergehenden Ansprüche 7 bis 9,
**dadurch gekennzeichnet, dass** die Gebersperrelemente (20a) mit der Geberwelle (10) lösbar oder unlösbar verbunden sind.

11. Geberbefestigung nach einem der vorhergehenden Ansprüche 1 bis 6,
**dadurch gekennzeichnet, dass** eine Federscheibe (25) zum Einbringen in dem Einschub (30) vorgesehen ist, an der das radial elastische Element angeordnet ist.

12. Geberbefestigung nach Anspruch 11,
**dadurch gekennzeichnet, dass** das radial elastische Element als radial ausragende, flügelartige Sperrelemente ausgebildet ist, wobei die Federscheibe (25) eine Innenumfangsseite (21) mit einem Innendurchmesser aufweist und die Gebersperrelemente (20a) an der Innenumfangsseite (21) angeordnet sind, und wobei die Federscheibe (25) eine Außenumfangsseite (22) mit einen Außendurchmesser aufweist und wobei die Antriebssperrelemente (20b) an der Außenumfangsseite (22) angeordnet sind und wobei die Gebersperrelemente (20a) und die Antriebssperrelemente (20b) radial entgegengesetzt ausgerichtet sind.

13. Geberbefestigung nach Anspruch 11 oder 12,
**dadurch gekennzeichnet, dass** zumindest eines der Antriebssperrelemente (20b) mit dem korrespondierenden Gebersperrelement (20a) durch einen Steg (23) verbunden ist.

14. Geberbefestigung nach einem der vorhergehenden Ansprüche 11 bis 13,
**dadurch gekennzeichnet, dass** die Antriebssperrelemente (20b) axial entgegengesetzt zu den Gebersperrelementen (20a) gebogen sind.

15. Geberbefestigung nach einem der vorhergehenden Ansprüche 11 bis 14,
**dadurch gekennzeichnet, dass** die Antriebssperrelemente (20b) mit der Geberwelle (10) lösbar oder unlösbar verbunden sind.

16. Geberbefestigung nach einem der vorhergehenden Ansprüche 11 bis 15,
**dadurch gekennzeichnet, dass** Gebersperrelemente (20a) mit der Antriebswelle (4) lösbar oder unlösbar verbunden sind.

17. Geberbefestigung nach einem der vorhergehenden Ansprüche,
**dadurch gekennzeichnet, dass** das radial elastische Element eine federnde Charakteristik aufweist.

18. Verfahren zur Geberbefestigung mit einer Antriebswelle (4) und einem Gebersystem mit einer Geberwelle (10), wobei die Geberwelle (10) zur Verbindung teilweise in die Antriebswelle (4) in einen dafür vorgesehen Einschub (30) eingeschoben wird,
**dadurch gekennzeichnet, dass** die Verbindung unter radialer Spannung steht, indem zur Befestigung ein radial elastisches Element in dem Einschub (30) angeordnet wird.
